# FASCICULE DE BREVET EUROPEEN

(11) **EP 0 491 821 B1**
(45) Date de publication et mention de la délivrance du brevet: **01.06.1994**
(21) Numéro de dépôt: 90914211.9
(22) Date de dépôt: 11.09.1990
(51) Int. Cl.: C02F 1/14, C02F 1/04

(54) **PROCEDE DE PRODUCTION D'EAU DOUCE A PARTIR D'EAUX CHARGEES ET INSTALLATION POUR LA MISE EN UVRE DU PROCEDE**
VERFAHREN UND ANLAGE ZUR ERZEUGUNG VON TRINKWASSER AUS BELASTETEM WASSER
PROCESS FOR THE PRODUCTION OF FRESH WATER USING WATER CONTAINING IMPURITIES AND INSTALLATION FOR ITS IMPLEMENTATION

(30) Priorité: 15.09.1989 FR 8912137
(43) Date de publication de la demande: 01.07.1992
(73) Titulaire: BLONDEL, Guy, 59185 Provin (FR)
(72) Inventeur: BLONDEL, Guy, 59185 Provin (FR)
(74) Mandataire: Ecrepont, Robert
(86) Numéro de dépôt international: FR9000646
(87) Numéro de publication internationale: WO9104228

(56) Documents cités:
- DE-A- 1 517 530
- DE-A- 3 625 452
- DE-A-25 075 93
- DE-C- 673 587
- FR-A- 1 354 196
- FR-A- 2 372 771
- OA-A- 03 323
- US-A- 3 992 246

## Description

La présente invention a pour objet un procédé de production d'eau douce à partir d'eaux chargées.

Elle a également pour objet l'installation pour la mise en oeuvre du procédé selon l'invention.

Par eaux chargées, on comprendra les eaux de mer, saumâtres, marécageuses ou issues de l'industrie.

On connaît (DA-3323) une installation qui comprend une étendue couverte d'une structure perméable au rayonnement solaire formant une serre dans laquelle on amène l'eau à traiter par ruissellement.

Celle-ci au moins indirectement sous l'effet du rayonnement solaire est évaporée dans l'air emprisonné sous la structure.

Par un courant de convection, l'air plus ou moins chargé en vapeur d'eau est conduit à un échangeur de chaleur dans lequel la vapeur est condensée et recueillie tandis que l'air asséché est soit recyclé vers la serre, soit rejeté vers l'atmopshère.

Dans les installations connues, l'inconvénient majeur est le faible rendement.

Pour augmenter ce rendement, il faut saturer l'air plus rapidement ; fréquemment, on utilise à cet effet des moyens de pulvérisation de l'eau chargée dans l'air emprisonné sous la structure.

Ces moyens de pulvérisation sont coûteux à l'entretien car ils véhiculent des eaux chargées et sont donc sujets particulièrement aux colmatages et à l'agressivité par exemple du sel contenu dans l'eau.

Un des résultats que vise l'invention est de remédier aux problèmes précités.

A cet effet, l'invention se rapporte à un procédé du type précité notamment caractérisé en ce que l'évaporation des eaux chargées est faite sur des monticules en matériau capillaire disséminés et répartis sur toute l'étendue de la salle d'évaporation entre lesquels on fait circuler le fluide chargé.

Elle se rapporte également à l'installation mettant en oeuvre ce procédé.

L'invention sera bien comprise à l'aide de la description ci-aprés faite à titre d'exemple non limitatif en regard des dessins ci-annexés qui représentent schématiquement :

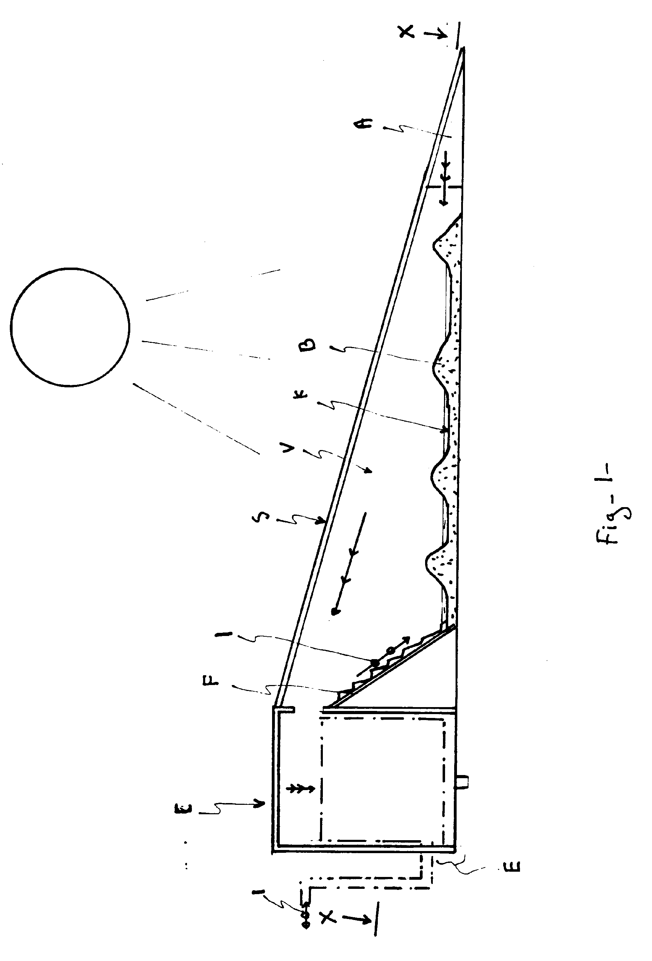

- figure 1 : une installation vue de profil,

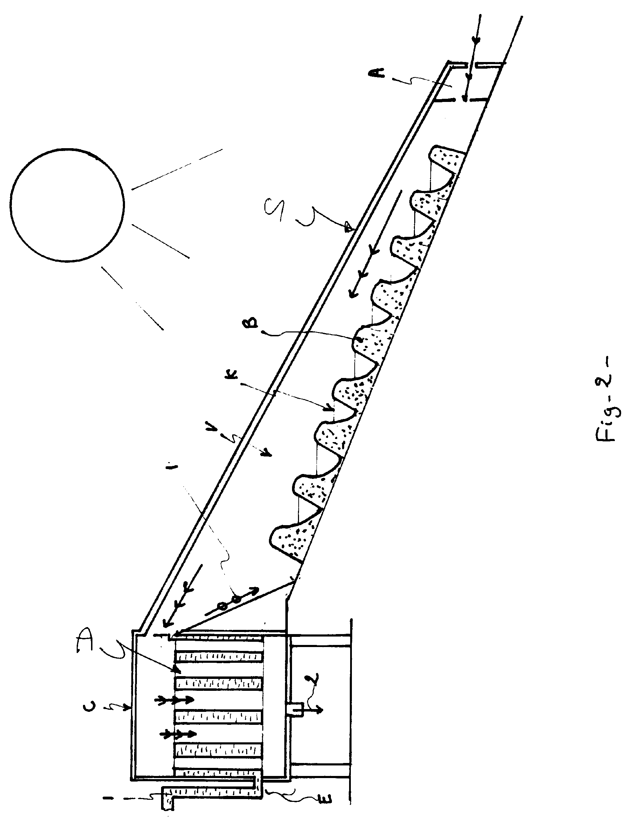

- figure 2 :une variante de réalisation de l'installation,

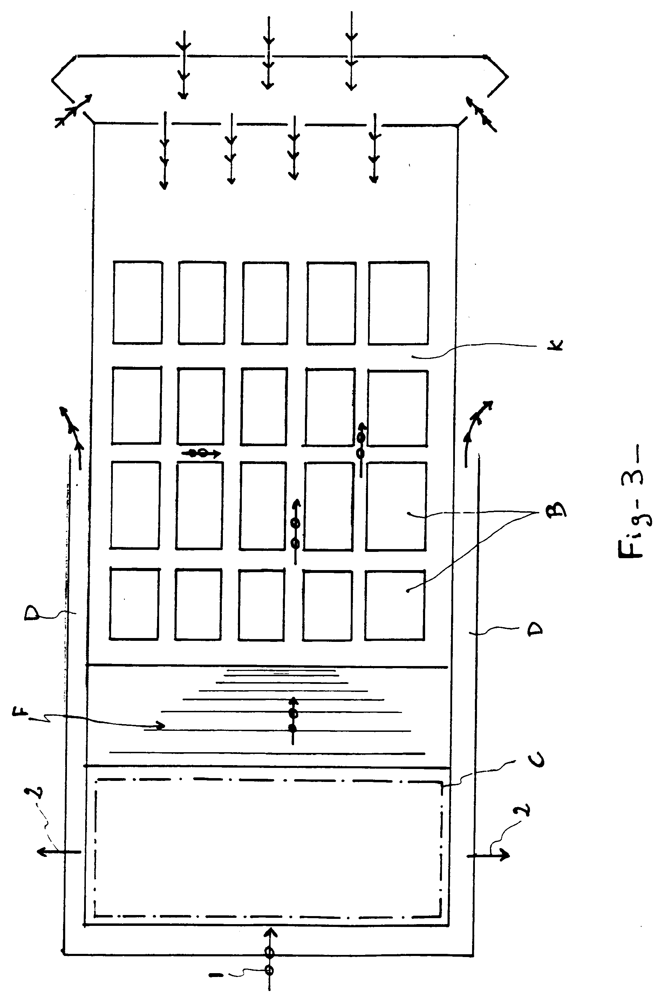

- figure 3 : une coupe selon XX de la figure 1.

Sur ces figures, la référence 1 correspond à l'eau à traiter, la référence 2 à l'eau produite, le fléchage avec trois têtes de flèches au circuit de l'air, le fléchage avec une tête de flèche et deux cercles au circuit de l'eau.

L'installation est constituée d'une structure S orientée vers le soleil, quasiment étanche à l'air pour éviter toute fuite d'air vers l'atmosphère et perméable au rayonnement solaire afin de créer un effet de serre maximum sous sa face intérieure.

Cette structure est inclinée et s'élève depuis une zone de pré-réchauffement A où se produit l'entrée de l'air vers un échangeur C où est introduit l'eau.

La nature de son matériau résiste aux rayons ultra-violets, infra-rouges et à une température de 110°C au moins.

Cette structure résiste aux intempéries, elle est souple ou rigide, à simple, double ou triple parois suivant son implantation géographique et la valeur de l'investissement.

On incline la structure depuis l'entrée de l'air vers l'entrée de l'eau afin de permettre l'ascension de l'air vers l'échangeur.

L'inclinaison de la structure S permet la récupération des éventuelles eaux pluviales et le nettoyage de sa face supérieure (dépôts de sable par exemple).

La structure utilisée pourra être bombée de manière à permettre, d'une part, la concentration du rayonnement solaire et, d'autre part, une orientation convenable quelle que soit l'orientation en site et azimut du soleil.

Sous cette structure S où règne un effet de serre maximum, il y a d'abord une salle A de pré-réchauffement de l'air puis une salle d'évaporation V où de manière caractéristique l'évaporation est faite sur des monticules B en matériau capillaire disséminés et répartis sur toute l'étendue de la salle d'évaporation entre lesquels on fait circuler le fluide chargé, lesquels monticules B sont par exemple formés par les résidus de l'évaporation de l'eau à traiter qui s'accumulent au fur et à mesure de la répétition journalière du processus.

Ces résidus seront à éliminer au moins partiellement et périodiquement par tous moyens, mécaniques ou par canon à eau.

Ils seront valorisés (sel marin par exemple), injectés en mer ou lagunés.

L'eau à traiter avant de circuler de la salle d'évapoaration transite par l'échangeur C.

On irrigue par des canaux K circulant entre les monticules B de manière à faire monter l'eau par capillarité dans les monticules.

Faisant suite à la structure S, il y a l'échangeur C, où l'eau à traiter élevée dans une tuyauterie au même niveau que la sortie de l'échangeur, y pénètre par le bas et refroidit le faisceau tubulaire de l'échangeur.

Dans sa partie supérieure, l'échangeur reçoit l'air chaud saturé de vapeur d'eau.

Dans sa partie basse E, l'eau condensée est récupérée ; l'air asséché passe dans un ou des couloirs de refroidissement D où il se décharge du reste de vapeur d'eau sur des plaques réfrigérées (les réfrigérants peuvent être alimentés par l'énergie solaire par compression ou absorption) et ensuite retourne soit dans l'atmosphère, soit vers la chambre de pré-réchauffement A.

On isole thermiquement cet échangeur de la chaleur atmosphérique ; le matériau devra résister à l'agression de l'eau à traiter, à l'eau douce et à la fixation des algues et divers dépôts.

De préférence, l'échangeur sera de type tube à ailettes qui offre une surface de contact importante avec l'air plus ou moins saturé en vapeur d'eau.

Entre l'échangeur C et la surface d'évaporation V, il y a de préférence un plan F de pré-réchauffement de l'eau à traiter.

Cette surface sera formée en cascades, la face inférieure sera isolée thermiquement ; la nature de son matériau devra résister à l'agression de l'eau à traiter, à la fixation des algues, aux rayons ultra-violets, à une température de 110°C minimum et devra être de couleur foncée pour absorber le rayonnement solaire et restituer la chaleur à traiter.

Description du procédé :

### A - Circuit de l'air :

L'air est réchauffé par le rayonnement solaire dans la salle A ; s'échauffant, il s'élève sous la structure S et vient dans la salle d'évaporation V se saturer d'eau par les vapeurs d'eau s'évaporant des monticules B eux-mêmes chauffés par le rayonnement solaire ; l'énergie solaire captée dans les monticules provoque l'évaporation de l'eau dans l'air.

On amène l'air saturé dans l'échangeur C où on provoque la dépose de la vapeur d'eau qu'il véhicule sur les parois froides de cet échangeur qui sont refroidies par l'eau à traiter froide.

Le refroidissement le rendant plus dense, il descend dans la partie basse E de l'échangeur d'où il passe puis dans le ou les couloirs D où il se décharge du restant de vapeur d'eau sur des plaques réfrigérées.

Dans une variante du procédé, l'air ainsi séché et refroidi est renvoyé dans la salle de pré-réchauffement A pour à nouveau se réchauffer.

Le processus recommence tout en s'accélérant au fur et à mesure de la montée en puissance du rayonnement solaire.

Lorsque l'air séché est retourné à l'atmosphère, de l'air atmosphérique est introduit dans la salle de pré-réchauffement A.

Cet apport est fait de manière à éviter de perturber la circulation de l'air menant à l'échangeur.

### B - Circuit de l'eau :

L'eau de mer (saumâtre, marécageuse ou issue de l'industrie) doit être puisée de préférence à grande profondeur pour être à une température idéale de 15°C.

Si l'eau puisée n'est pas suffisamment froide pour un rendement satisfaisant de l'échangeur, un refroidissement pourra être prévu.

Aprés filtration, elle est élevée par pompe (l'unique besoin en énergie, bien que l'on puisse se servir de pompes électriques alimentées par cellules photo-voltaïques) au même niveau que la sortie de l'échangeur C puis est conduite à la partie basse de cet échangeur.

Par absorption des calories de l'air chaud et saturé, on réchauffe l'eau froide à traiter qu'on amène dans l'échangeur C, on fait monter cette eau dans l'échangeur C par différence de densité et on provoque l'écoulement vers les canaux K.

Dans l'échangeur C, l'eau refroidit l'air saturé et préleve ses calories ; tout en s'échauffant, elle monte et arrive au sommet de l'échangeur à une température de 40 à 50°C.

Elle s'écoule ensuite de préférence sur le plan incliné F dont la forme en cascades et la nature de son matériau absorbant le rayonnement solaire permet le réchauffement de l'eau qui arrive par ruissellement dans les canaux K où elle pénètre dans les monticules B et monte par capillarité dans ceux-ci.

Ces monticules formés par les résidus solides de l'évaporation (sels marins, boues diverses) absorbent l'énergie solaire et la restitue à l'eau qui, de ce fait, se vaporise et vient saturer ensuite l'air chaud et sec venant de la chambre A.

Les matières dissoutes dans l'eau à traiter viendront cristalliser sur la face externe des monticules B et augmenteront la hauteur et la surface d'échange avec l'air chaud ; les matières en suspension non arrêtées par la filtration primaire se déposeront dans les canaux K.

Le décolmatage des canaux K et la régénération des monticules B se fera périodiquement par tous moyens tels des moyens mécaniques ou un canon à eau (alimenté en eau à traiter).

Les résidus pourront être récupérés (sels marins, argile pour briques etc ...) ou rejetés en mer (loin du captage) ou par lagunage.

L'eau douce condensée dans l'échangeur C et dans les chambres D est récupérée en E pour être ensuite distribuée et affectée à différents usages.

Ce procédé permettra l'irrigation de régions désertiques ou semi-désertiques en permettant à des populations d'y vivre décemment et de s'y fixer.

La simplicité du procédé et de l'installation donne des prix de revient de l'eau douce produite presque négligeables.

La trés faible inertie thermique du procédé autorise un démarrage matinal trés rapide.

Le procédé s'adapte à toutes tailles d'installation (de un litre par minute à dix mètres cube par seconde d'eau douce produite) et est essentiellement destinée à des contrées ou îles bénéficiant d'un bon ensoleillement et ayant un déficit de ressources en eau douce.

Les installations peuvent s'accomoder de sites trés divers: salines, lagunes, flancs de collines ou falaises, plaines etc ...

Pour éviter que le volume d'air à chauffer soit trop important notamment en raison de l'élévation de la structure favorisant la convection de l'air chaud, il sera plus intéressant de réaliser une succession de salle en gradin limitant ainsi à une faible hauteur, la distance de la surface sur laquelle s'écoule l'eau à traiter.

## Revendications

1. Procédé destiné à la production d'eau douce en utilisant l'énergie solaire, lequel procédé utilise une installation constituée d'une structure (S) orientée vers le soleil, perméable au rayonnement solaire formant une serre comprenant une salle de pré-réchauffement (A) et une salle d'évaporation (V) dans laquelle de l'eau chargée est introduite pour être évaporée sous l'effet du rayonnement solaire dans l'air emprisonné sous la structure, cet air étant réchauffé par le rayonnement solaire dans la salle de pré-réchauffement (A) et amené vers un échangeur de chaleur pour que les vapeurs qu'il porte soient condensées et recueillies,
ce procédé étant **CARACTERISE** en ce que l'évaporation des eaux chargées est faite sur des monticules en matériau capillaire disséminés et répartis sur toute l'étendue de la salle d'évaporation.

2. Procédé selon la revendication 1 **caractérisé** en ce qu'on irrigue ces monticules en amenant l'eau à traiter par un réseau de canaux (K) circulant entre les dits monticules de manière à faire monter cette eau dans ces monticules par capillarité et, à l'aide de l'énergie solaire captée par les monticules, on provoque l'évaporation de l'eau et la saturation de l'air venant de la chambre de pré-réchauffement (A).

3. Procédé selon la revendication 1 ou 2 **caractérisé** en ce que :
- on recouvre la chamber de pré-réchauffement (A) et la chambre d'évaporation où sont situés les canaux (K) et les monticules B d'une structure (S) laissant passer l'énergie solaire avec le meilleur rendement possible pour obtenir l'effet de serre maximum mais quasiment étanche pour éviter les fuites dans l'atmosphère de l'air saturé en vapeur d'eau et résistant aux intempéries et
- on incline cette structure pour avoir une pente ascendante depuis l'entrée de l'air (A) vers l'entrée de l'eau (C) afin de permettre l'ascension de l'air qui se réchauffe et l'écoulement et la récupération en un point bas des éventuelles chutes de pluie.

4. Procédé selon l'une quelconque des revendications 1 à 3 **caractérisé** en ce qu'on amène l'air chaud saturé dans l'échangeur (C) où, au contact des parois refroidies par l'eau à traiter froide, on provoque la dépose sur ces parois d'une grande partie de la vapeur d'eau qu'il véhicule.

5. Procédé selon l'une quelconque des revendications 1 à 4 **caractérisé** en ce qu'on amène l'eau à traiter la plus froide possible pour obtenir le rendement optimum de l'échangeur (C).

6. Procédé selon l'une quelconque des revendications 1 à 5 **caractérisé** en ce qu'on conduit l'air sortant de l'échangeur (C) entre des plaques réfrigérantes par lesquelles on assèche et refroidit l'air.

7. Procédé selon l'une quelconque des revendications 1 à 6 **caractérisé** en ce que :
- on isole par rapport à la surface sur laquelle l'installation repose et on rend étanche le plan de la chambre (V) contenant les reliefs et les canaux d'irrigation et
- on isole l'échangeur (C) et le ou les couloirs réfrigérés (D) du rayonnement solaire.

8. Procédé selon l'une quelconque des revendications 1 à 7 **caractérisé** en ce que :
- par absorption des calories de l'air chaud et saturé, on réchauffe l'eau froide qu'on amène dans l'échangeur (C) et qu'on fait monter dans l'échangeur (C) par la différence de densité et
- on provoque l'écoulement en cascade vers les canaux (K) en la faisant passer sur un plan (F) incliné qu'on isole de l'échangeur (C) et sur lequel plan incliné on la réchauffe par le rayonnement solaire.

9. Installation pour la mise en oeuvre du procédé selon l'une quelconque des revendications 1 à 8, laquelle est constituée d'une structure (S) orientée vers le soleil, perméable au rayonnement solaire formant une serre comprenant une salle de pré-réchauffement (A) et une salle d'évaporation (V) dans laquelle de l'eau chargée est introduite pour être évaporée sous l'effet du rayonnement solaire dans l'air emprisonné sous la structure qui est réchauffé par le rayonnement solaire dans la salle de pré-réchauffement (A) et amené vers un échangeur de chaleur pour être condensé et recueilli **caractérisée** en ce qu'elle comprend des monticules (B) de matériau capillaire disséminés et répartis sur toute l'étendue de la salle d'évaporation entre lesquels circulent des canaux (K).

## Patentansprüche

1. Verfahren zur Herstellung von Trinkwasser unter Einsatz von Sonnenenergie, bei welchem eine Anlage zum Einsatz kommt, die aus einer der Sonne zugekehrten und für die Sonnenstrahlung durchlässigen Konstruktion (S), welche ein Glasgehäuse bildet, das einen Vorheizraum (A) und einen Verdampfungsraum (V) umfaßt, in welchen das Rohwasser zur Verdampfung unter Einwirkung der Wärme der Sonnenstrahlung in der unter der Konstruktion eingeschlossenen Luft eingeleitet wird, wobei diese Luft durch die Sonnenstrahlung im Vorheizraum (A) nochmals erwärmt und einem Wärmetauscher zugeleitet wird, damit die von ihr mitgeführten Dämpfe kondensiert und als Kondensat aufgefangen werden können,
**dadurch GEKENNZEICHNET,** daß die Verdampfung des Rohwassers auf kleinen Hügeln aus Material mit Kapillarwirkung erfolgt, welche über die gesamte Ausdehnung des Verdampfungsraums ausgestreut und verteilt sind.

2. Verfahren nach Anspruch 1, dadurch **gekennzeichnet**, daß diese kleinen Hügel unter Zuführung des zu behandelnden Wassers über ein Kanalnetz (K) berieselt werden, welches zwischen den kleinen Hügeln in der Weise verlegt ist, daß infolge der Kapillarwirkung das Wasser in diesen kleinen Hügeln hochsteigt, und daß mit Hilfe der von den kleinen Hügeln eingefangenen Sonnenenergie die Verdampfung des Wassers und die Sättigung der aus dem Vorheizraum (A) kommenden Luft herbeigeführt werden.

3. Verfahren nach Anspruch 1 oder 2, dadurch **gekennzeichnet**,
- daß der Vorheizraum (A) und der Verdampfungsraum, in welchem sich die Kanäle (K) und die kleinen Hügel (B) befinden, mit einer Konstruktion (S) überdeckt werden, welche die Sonnenenergie mit größtmöglicher Ausbeute hindurchtreten läßt, um eine maximale Glashauswirkung zu erzielen, während sie jedoch, um das Austreten der mit Wasserdampf gesättigten Luft in die Atmosphäre zu verhindern, quasi dicht und darüberhinaus witterungsbeständig ist, und
- daß diese Konstruktion so geneigt wird, daß sie eine vom Lufteintritt (A) zum Wassereintritt (C) ansteigende Schräge aufweist, um ein Hochsteigen des sich wieder erwärmenden Wassers sowie das Ablaufen und Wiederauffangen gegebenenfalls fallenden Regenwassers an einem tiefgelegenen Punkt zu ermöglichen.

4. Verfahren nach einem der Ansprüche 1 bis 3, dadurch **gekenn****zeichnet,** daß die gesättigte warme Luft dem Wärmetauscher (C) zugeführt wird, in welchem bei Kontakt der durch das zu behandelnde kalte Wasser gekühlten Wandungen die Ablagerung eines großen Teils des in der Luft mitgeführten Wasserdampfes auf diesen Wandungen herbeigeführt wird.

5. Verfahren nach einem der Ansprüche 1 bis 4, dadurch **gekenn****zeichnet**, daß das zu behandelnde Wasser im kältestmöglichen Zustand zugeführt wird, um eine optimale Leistung des Wärmetauschers (C) zu erzielen.

6. Verfahren nach einem der Ansprüche 1 bis 5, dadurch **gekenn****zeichnet**, daß die aus dem Wärmetauscher (C) austretende Luft zwischen Kühlplatten geführt wird, durch welche der Luft Wasser entzogen und die Luft gekühlt wird.

7. Verfahren nach einem der Ansprüche 1 bis 6, dadurch **gekenn****zeichnet**,
- daß die Ebene des Verdampfungsraums (V), in welchem sich die Erhebungen und die Berieselungskanäle befinden, gegenüber der Fläche, auf welcher die Anlage aufliegt, isoliert und abgedichtet wird, und
- daß der Wärmetauscher (C) sowie der gekühlte Durchlaß bzw. die gekühlten Durchlässe (D) für die Sonnenstrahlung isoliert werden.

8. Verfahren nach einem der Ansprüche 1 bis 7, dadurch **gekenn****zeichnet**,
- daß das kalte Wasser, das dem Wärmetauscher (C) zugeführt wird, durch Absorption der in der warmen und gesättigten Luft mitgeführten Wärmemenge erwärmt wird, und daß dessen Anstieg im Wärmetauscher (C) durch den Dichteunterschied bewirkt wird, und
- daß dessen kaskadenförmiger Ablauf zu den Kanälen (K) dadurch herbeigeführt wird, daß man es über eine schräge Ebene (F) fließen läßt, welche gegenüber dem Wärmetauscher (C) isoliert ist und auf welcher es durch die Sonnenstrahlung erwärmt wird.

9. Anlage zur Durchführung des Verfahrens nach einem der Ansprüche 1 bis 8, die aus einer der Sonne zugekehrten und für die Sonnenstrahlung durchlässigen Konstruktion (S) besteht, welche ein Glasgehäuse bildet, das einen Vorheizraum (A) und einen Verdampfungsraum (V) umfaßt, in welchen das Rohwasser zur Verdampfung unter Einwirkung der Wärme der Sonnenstrahlung in der unter der Konstruktion eingeschlossenen Luft eingeleitet wird, wobei diese Luft durch die Sonnenstrahlung im Vorheizraum (A) nochmals erwärmt und einem Wärmetauscher zugeleitet wird, damit die von ihr mitgeführten Dämpfe kondensiert und als Kondensat aufgefangen werden können, dadurch **gekennzeichnet**, daß sie kleine Hügel (B) aus Material mit Kapillarwirkung aufweist, welche über die gesamte Ausdehnung des Verdampfungsraums ausgestreut und verteilt sind und zwischen denen die Kanäle (K) verlaufen.

## Claims

1. A process for the production of fresh water by means of solar energy, the said process making use of an installation comprising a structure (S), orientated towards the sun, permeable to solar radiation and forming a glasshouse comprising a pre-heating chamber (A) and an evaporation chamber (V) into which contaminated water is introduced in order to be evaporated by the effect of the solar radiation on the air captured beneath the structure, the said air being heated by the solar radiation in the pre-heating chamber (A) and guided to a heat exchanger in order that the vapour which it is carrying can be condensed and collected, the said process being **characterised in** **that** the evaporation of the contaminated water is carried out on mounds of capillary material scattered and distributed over the entire extent of the evaporation chamber.

2. A process in accordance with claim 1, **characterised in that** the said mounds are irrigated by conveying the water to be processed by means of a network of channels (K) circulating between the said mounds in such a manner as to make the said water rise into the said mounds by capillarity, and evaporation of the water and saturation of the air issuing from the pre-heating chamber (A) are both brought about by means of the solar energy captured by the mounds.

3. A process in accordance with claim 1 or 2, **characterised in that**
- the pre-heating chamber (A), the evaporation chamber where the channels (K) are located, and the mounds (B) are covered with a structure (S), which allows passage of solar energy with the highest possible efficiency in order to obtain the maximum glasshouse effect, but is practically watertight in order to avoid leaks into the atmosphere of the air saturated with water vapour, and is resistant to bad weather; and
- the said structure is inclined in order to create a slope climbing from the point of entry of the air (A) towards the point of entry of the water (C) so as to allow the air, which is heating up, to rise, and to allow any rainfall to drain and be collected at a low point.

4. A process in accordance with any one of claims 1 to 3, **characterised** **in that** the saturated hot air is conveyed to the exchanger (C) where, upon contact with the walls cooled by the cold water to be processed, a large part of the water vapour being carried by the air is caused to condense on the said walls.

5. A process in accordance with any one of claims 1 to 4, **characterised** **in that** the water to be processed is as cold as possible when being conveyed, in order to obtain maximum efficiency of the exchanger (C).

6. A process in accordance with any one of claims 1 to 5, **characterised** **in that** the air leaving the exchanger (C) is guided between refrigerating plates, by means of which the air is dried and cooled.

7. A process in accordance with any one of claims 1 to 6, **characterised** **in that**:
- the plane of the chamber (V) containing the reliefs and irrigation channels is insulated in relation to the surface on which the installation rests, and is watertight;
- the exchanger (C) and the refrigerated passage or passages (D) are insulated from the solar radiation.

8. A process in accordance with any one of claims 1 to 7, **characterised** **in that**
- the cold water guided into the exchanger (C) is heated by absorption of calories from the hot saturated air, and is made to rise into the exchanger (C) by the difference in density;
- the cascade running to the channels (K) is produced by making the water pass over an angled plane (F) insulated from the exchanger (C), and the water is heated on the said angled plane by solar radiation.

9. An installation for the implementation of the process in accordance with any one of claims 1 to 8, comprising a structure (S) orientated towards the sun, permeable to solar radiation and forming a glasshouse comprising a pre-heating chamber (A) and an evaporation chamber (V) into which contaminated water is introduced in order to be evaporated by the effect of the solar radiation on the air captured beneath the structure, the air being heated by the solar radiation in the pre-heating chamber (A) and guided to a heat exchanger to be condensed and collected, **characterised in that** it comprises mounds (B) of capillary material scattered and distributed over the entire extent of the evaporation chamber, and the channels (K) circulate between the said mounds.
